Europäisches Patentamt

European Patent Office

Office européen des brevets

(11) Numéro de publication: **0 222 638 B1**

# FASCICULE DE BREVET EUROPEEN

(45) Date de publication de fascicule du brevet:
**18.09.91**

(51) Int. Cl.⁵: **G06F 15/72**

(21) Numéro de dépôt: **86402223.1**

(22) Date de dépôt: **07.10.86**

(54) **Dispositif d'affichage graphique.**

(30) Priorité: **08.10.85 FR 8514881**

(43) Date de publication de la demande:
**20.05.87 Bulletin 87/21**

(45) Mention de la délivrance du brevet:
**18.09.91 Bulletin 91/38**

(84) Etats contractants désignés:
**DE GB IT**

(56) Documents cités:
**EP-A- 0 145 821**
**US-A- 4 297 691**

**IEEE TRANSACTIONS ON COMPUTERS, vol.
C-28, no. 7, juillet 1979, pages 528-531, IEEE,
New York, US; W.D.LITTLE et al.: "An area
shading graphics display system"**

**IEEE TRANSACTIONS ON COMPUTERS, vol.
C-34, no. 7, juillet 1985, pages 666-673, IEEE,
New York, US; MERAV CHLAMTAC et al.:
"The shift X parity watch algorithm for raster
scan displays"**

**IBM TECHNICAL DISCLOSURE BULLETIN, vol.
27, no. 10B, mars 1985, pages 6060-6061,**

**New York, US; "Raster shader"**

(73) Titulaire: **THOMSON-CSF**
**51, Esplanade du Général de Gaulle**
**F-92800 Puteaux(FR)**

(72) Inventeur: **Bouron, Jean-Pierre**
**THOMSON-CSF SCPI 19, avenue de Messine**
**F-75008 Paris(FR)**

(74) Mandataire: **Benoit, Monique et al**
**THOMSON-CSF SCPI**
**F-92045 PARIS LA DEFENSE CEDEX 67(FR)**

## Description

La présente invention concerne principalement un dispositif d'affichage graphique.

Les dispositifs d'affichage de type connu stockent en mémoire vidéo des images entières ce qui exige une grande capacité mémoire.

Le travail devant des dispositifs d'affichage devient de plus en plus fréquent. Par exemple les terminaux d'ordinateur comportent un dispositif d'affichage à tube cathodique. Le temps passé devant le dispositif d'affichage augmentant, on est amené à améliorer la qualité de l'affichage pour augmenter le confort de visualisation. Ceci est particulièrement important dans le cas où des décisions importantes doivent être prises en fonction des données affichées. La qualité d'affichage devient critique pour le pilotage d'avions, aux instruments, la visualisation des mesures étant faite sur écran cathodique.

Le dispositif selon l'invention est particulièrement performant pour afficher sur un écran les vues en perspective tridimensionnelles. Le dispositif selon l'invention utilise le balayage cavalier (direction-beam scanning en terminologie anglosaxonne), pour les dessins des motifs des limites ou des symboles associés au balayage trame permettant d'obtenir des zones colorées.

Par le document IEEE Transactions on computers, Vol. C-28, n° 7, juillet 1979, pages 528-531 il est connu un dispositif d'affichage graphique comportant un écran couleur à balayage trame ; l'affichage est obtenu par remplissage de zones d'ombres présentant des limites. Le dispositif comporte un microprocesseur qui calcule successivement pour chaque ligne de trame, les points d'intersection de la ligne de trame et des limites des zones d'ombres le traitement se fait trame par trame et les résultats obtenus pour une trame sont stockés dans une mémoire vidéo de trame ; une telle mémoire doit présenter une capacité importante et est donc chère volumineuse et lourde.

D'autres documents tels l'article de IEEE Transactions on computers, vol. C43, n° 7, juillet 1985, pages 666-673, qui décrit un dispositif de remplissage de zones colorées, ou la demande de brevet européen 0 145 821 ou l'article de IBM Technical Disclosure Bulletin, vol. 27, n° 10B, mars 1985, pages 6060-6061, présentent des dispositifs d'affichages dans lesquels le traitement se fait par trames et nécessite donc, comme dans le premier document cité, une capacité importante de mémoire.

Le dispositif selon l'invention comporte un microprocesseur rapide calculant en temps réel pour chaque ligne de trame l'abscisse du début et de la fin de l'affichage de chaque couleur. L'emploi d'un microprocesseur rapide calculant en temps réel les données affichées pour chaque ligne permet de réduire considérablement la taille des mémoires vidéo utilisées. Cet avantage est particulièrement important pour un équipement notamment destiné à être embarqué sur des aéronefs où l'on dispose de peu de place, et où, le poids des équipements embarqués est déterminant.

Selon l'invention il est proposé un dispositif d'affichage graphique comportant un écran couleur à balayage trame, l'affichage étant obtenu par remplissage de zones colorées délimitées par des limites, comportant un microprocesseur calculant successivement pour chaque ligne de trame les points d'intersection de ladite ligne de trame et desdites limites de zones colorées, caractérisé par un traitement de l'image ligne par ligne et par le fait qu'il comporte pour cela une mémoire vidéo de ligne stockant une ligne de trames à afficher et une seule.

L'invention sera mieux comprise au moyen de la description ci-après et des figures annexées données comme des exemples non limitatifs, parmi lesquels :

- la figure 1, est le dessin d'un écran à visualiser;
- la figure 2, est le dessin simplifié des motifs à dessiner sur un écran;
- la figure 3, est un dessin des zones de couleurs différentes à afficher;
- la figure 4, est un schéma du dispositif de type connu;
- la figure 5, est un dessin de zones de couleurs à afficher;
- la figure 6, est un shéma illustrant le codage des couleurs de la figure 5;
- la figure 7, est un schéma du contenu de la mémoire ligne correspondant au codage de la figure 6;
- la figure 8, est un schéma du dispositif selon l'invention;
- la figure 9, est un schéma d'un détail de réalisation du dispositif selon l'invention;
- la figure 10, est un dessin d'une image visualisée;
- la figure 11, est un organigramme du programme utilisé par le dispositif selon l'invention;
- la figure 12, est un organigramme d'un sousprogramme du programme de la figure 11.

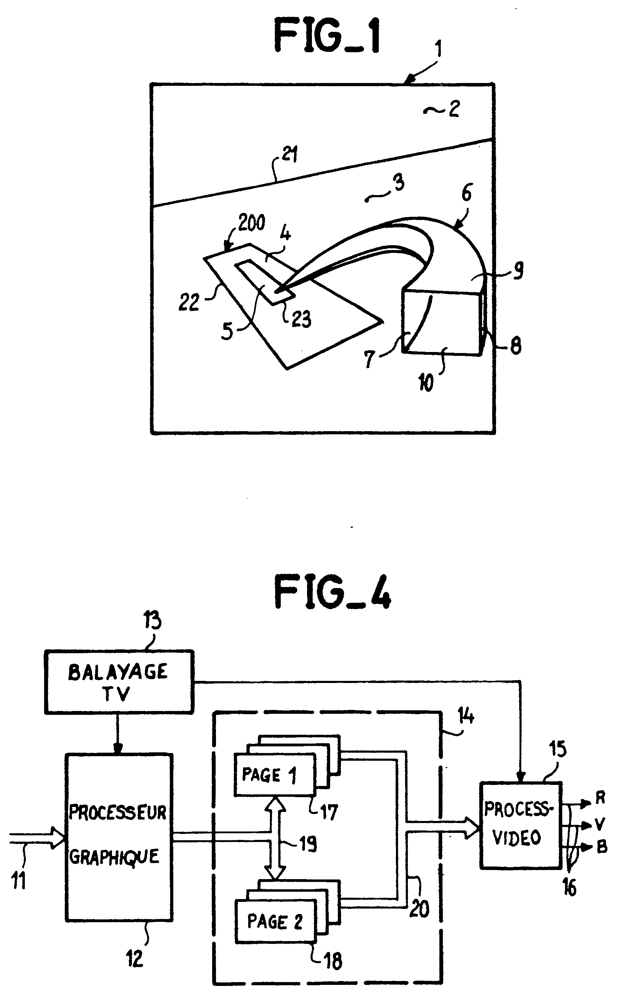

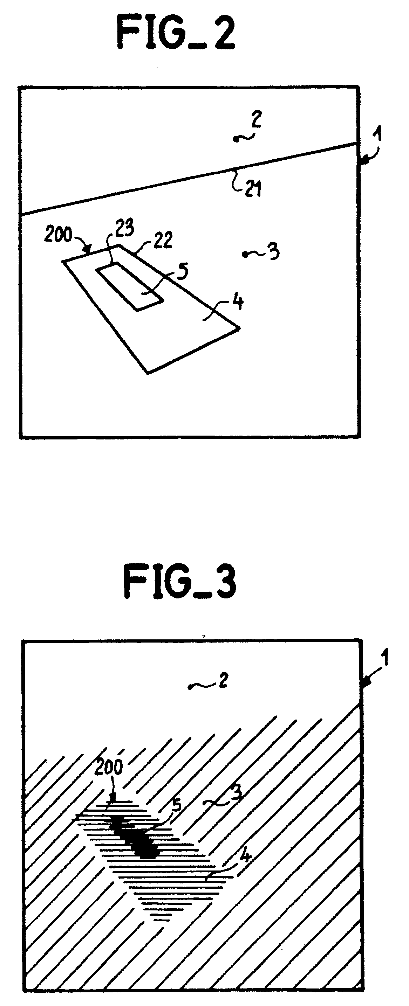

Sur les figures 1 à 12 on a utilisé les mêmes références pour désigner les mêmes éléments.

Sur la figure 1, on peut voir un exemple de dessin dont l'apparition sur l'écran 1 facilite au pilote l'atterrissage d'un avion. Le dessin comporte un schéma simplifié des pistes d'atterrissage 200 ainsi qu'un tunnel 6 qui correspond à la trajectoire optimisée de l'atterrissage de l'avion. Le dessin comporte la vue du ciel 2, de la terre 3. La piste d'atterrissage 200 comporte une zone 5 centrale correspondant à l'endroit où l'avion peut se poser avec le plus de sécurité ainsi qu'une zone périphérique 4. Le tunnel 6 comporte quatre faces 7,8,9 et 10. Le dispositif selon l'invention va dessiner en balayage cavalier, par exemple sur un tube cathodique, les motifs correspondant à l'horizon, limite entre le ciel 2 et la terre 3, les limites 22, 23, respectivement des zones 4 et 5 de la piste d'atterrissage 200 ainsi que les arêtes visibles du tunnel 6. Le balayage cavalier permet un dessin très net et très facilement perceptible et interprétable par le pilote. Le dispositif selon l'invention va améliorer le confort de visualisation en coloriant de couleurs différentes le ciel 2, la terre 3 ,les zones 4 et 5 de la piste d'atterrissage 200 ainsi que le couloir 6.

Avantageusement, le dispositif selon l'invention reçoit à partir d'un synthétiseur d'image les données sur les faces cachées des objets tridimentionels comme par exemple le tunnel d'atterrissage.

Le dispositif selon l'invention est capable à partir de ces informations de colorier avec la seule couleur visible à chaque endroit de l'écran. Le remplissage avec des couleurs s'effectue en balayage trame plus rapide que le balayage cavalier.

Sur la figure 2, on peut voir sur l'écran 1 le motif dessiné en balayage cavalier correspondant à l'horizon 21 et aux limites 22 et 23 respectivement des zones 4 et 5 de la piste d'atterrissage 200. Pour la clarté du dessin le couloir 6 n'a pas été dessiné sur la figure 2. Le balayage cavalier avec un tube à masque d'ombre (shadow-mask en terminologie anglo-saxonne) est réalisé de façon connue.

Sur la figure 3, on peut voir le remplissage avec des couleurs du ciel 2, de la terre 3 et des zones 4 et 5 de la piste d'atterrissage 200. Le coloriage des zones 2 à 5 est réalisé en balayage trame pendant les périodes non utilisées pour le balayage cavalier par le tube. Par exemple à une période de balayage cavalier de 8 ms succède une période de balayage trame de 8 ms, et ainsi de suite.

Sur la figure 4, on peut voir un dispositif d'affichage d'image de synthèse sur tube cathodique de type connu. Ce dispositif comporte un processeur graphique 12 associé à une mémoire d'image 14. La mémoire d'image 14 est reliée à un processeur vidéo 15 commandant directement les canons électrons rouge, vert et bleu 16 du tube cathodique à masque d'ombre, non représenté. Un circuit de balayage de trame 13 est relié au processeur graphique 12 et au processeur vidéo 15. Le processeur graphique 12 reçoit par un bus 11 les images générées par un générateur de symbole surfacique (GSS). Il les stocke dans la mémoire image 14. La mémoire image est une mémoire comportant plusieurs nappes permettant le stockage des informations nécessaires à constituer une image entière. L'écriture de la mémoire image comportant une image entière nécessite des processeurs graphiques très puissants.

Avantageusement le dispositif d'art connu utilise une mémoire d'image comportant deux pages 17 et 18. Alternativement le processeur graphique écrit l'une des pages mémoire 17 ou 18, l'autre 18 ou 17 servant à la génération sur écran de l'image désirée. Le processeur graphique 12 est relié par un bus 19 aux pages mémoire 17 et 18. Les pages mémoire 17 et 18 sont reliées par un bus 20 au processeur vidéo 15. Le circuit de balayage de trame 13 permet la synchronisation de l'adressage des pages de la mémoire image 14 avec l'affichage. Le circuit de balayage de trame 13 comporte des compteurs. Le processeur vidéo 15 génère des signaux analogiques qui permettent de commander directement les canons à électrons d'un tube à rayons cathodiques couleur. Les signaux 16 attaquant les canons rouge, vert et bleu permettent l'obtention des couleurs désirées.

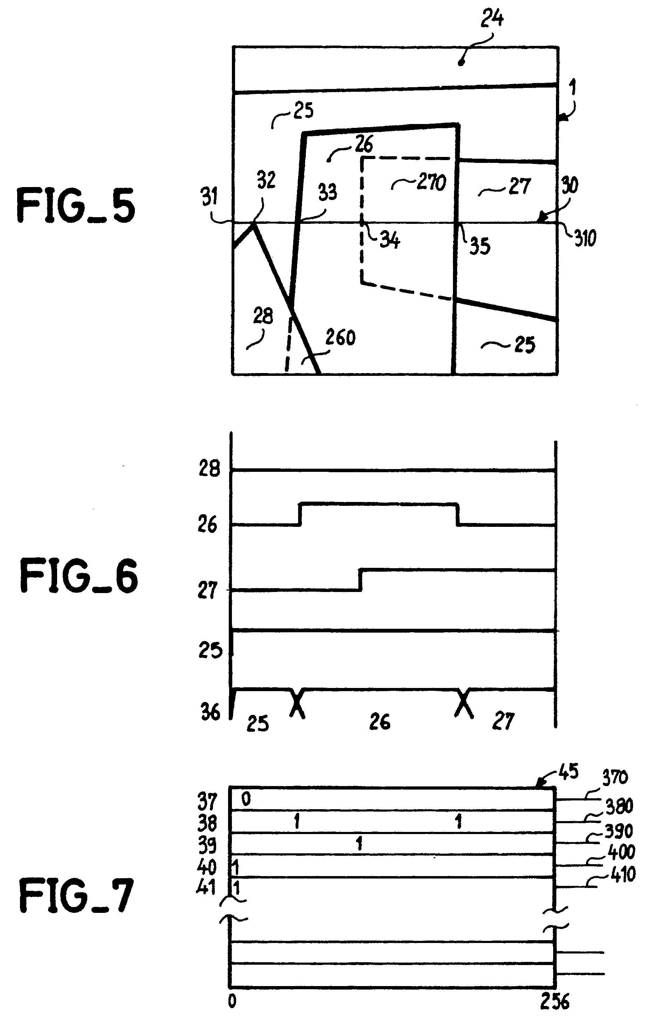

Sur la figure 5, on peut voir un exemple des figures à afficher sur l'écran 1. On a utilisé la même échelle sur les figures 5, 6 et 7. L'image à afficher comporte des surfaces 24, 25, 26, 27 et 28 de couleurs différentes. Les surfaces sont considérées comme des surfaces fermées, éventuellement par le bord de l'écran 1. Dans certain cas, la surface d'une couleur recouvre une partie de la surface d'une autre couleur, par exemple, la partie 270 de la surface 27 est recouverte par la surface 26. De même, la partie 260 de la surface 26 est recouverte par la surface 28.

Le dispositif selon l'invention traite en temps réel chaque ligne à afficher. Prenons par exemple la ligne 30. Elle coupe la surface 25 au point 31 et au point 310. La ligne 30 coupe la surface 28 au point 32. La ligne 30 coupe la surface 26 aux points 33 et 35. La ligne 30 coupe la surface 27 aux points 34 et 310. La ligne 30 ne coupe pas la surface 24.

Sur la figure 6, on peut voir les chronogrammes correspondant à l'affichage des diverses couleurs sur la ligne 30 de la figure 5. Un état logique haut correspond à la présence de la couleur, un état logique bas correspond à l'absence de la couleur. Les courbes 25, 26, 27 et 28 représentent la présence ou l'absence des couleurs des surfaces 25, 26, 27 ou 28 sur la ligne 30 de la figure 5. Sur la courbe 36 on peut voir le codage résultant des couleurs à afficher pour la ligne 30 effectué par le microprocesseur du dispositif selon l'invention. Ce codage a été effectué en tenant compte des priorités des couleurs résultant de l'existence d'un dessin de faces cachées se trouvant derrière des faces visibles. Ainsi, par exemple la région 270 de la surface 27 cachée par la surface 26 n'apparaîtra pas sur l'écran.

Sur la figure 7, on peut voir le remplissage d'une mémoire vidéo ligne où sont inscrites les présences et les absences des diverses couleurs. Cette mémoire comporte autant de mots que de couleurs devant être affichées. Par exemple la mémoire vidéo ligne comporte seize mots. La longueur du mot exprimé en bit correspond au nombre d'éléments d'image (pixel en terminologie anglo-saxonne). Par exemple pour un tube de faible dimension comportant 256 éléments d'image on utilise des mots de 256 bits. Les mots 37, 38, 39, 40 et 41 correspondent respectivement aux couleurs de surface 28, 26, 27, 25 etc. . . . On inscrit dans le mot mémoire d'une couleur donnée un "1" à l'adresse correspondant au numéro de l'élément d'image où l'on franchit, sur la ligne 30, la limite de ladite couleur. Avantageusement on ne marque pas de "1" pour les images débordant de l'écran et donc se terminant au point 310 de la figure 5. De plus, il subsiste des "1" isolés correspondant au point singulier par exemple le point 32. Ce "1" étant éliminé par la suite n'est pas représenté sur la figure. Tous les mots correspondant à toutes les couleurs sont lus en parallèle par des lignes 370, 380, 390, 400, 410 et ainsi de suite.

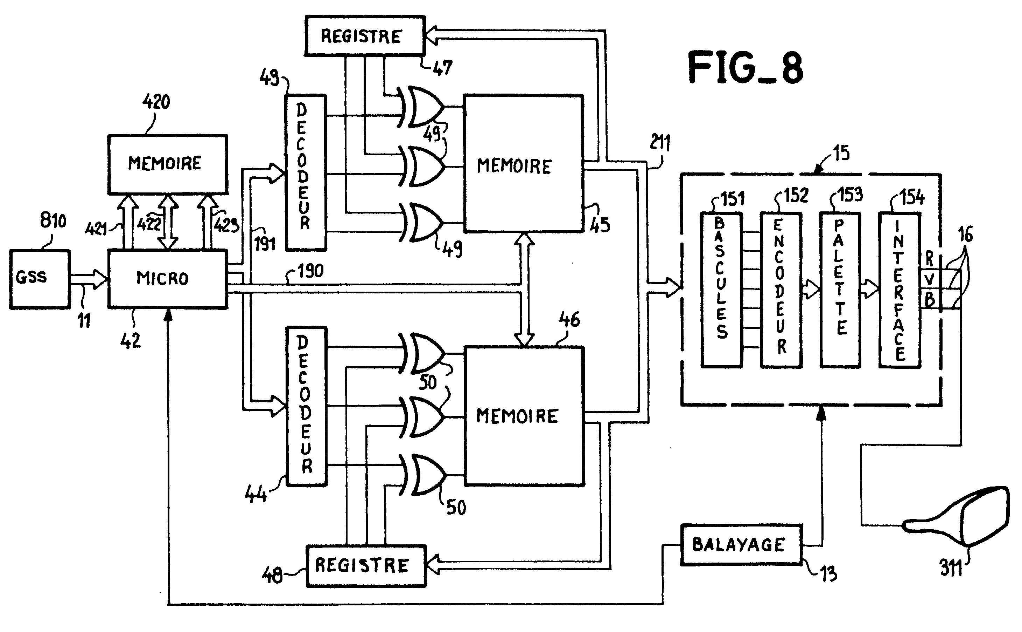

Sur la figure 8, on peut voir le schéma général du dispositif selon l'invention. Le dispositif comporte un microprocesseur 42 associé à une mémoire vidéo de ligne 45 et un processeur vidéo 15.

Avantageusement le dispositif comporte un registre 47 et un décodeur 43 reliés par des portes logiques "ou exclusif" à la mémoire vidéo 45 permettant de traiter les points singuliers pour lesquels on ne désire pas de changement de couleur.

Avantageusement le dispositif selon l'invention comporte une seconde mémoire vidéo de ligne 46 associée à un registre 48 et à un décodeur 44 par des portes logiques "ou exclusif" 50. Un circuit de balayage trame 13 est connecté au microprocesseur 42 et au processeur vidéo 15. Le microprocesseur 42 reçoit par un bus 11 les informations numérisées sur l'image à afficher. Ces renseignements proviennent d'un synthétiseur d'image 810, d'un disque optique numérique ou d'un convertisseur analogique-numérique connecté à un magnétoscope ou à une caméra de télévision. Le microprocesseur 42 est relié par un bus 191 aux décodeurs 43 et 44. Le bus 191 transmet les priorités affectées aux diverses couleurs que l'on veut pouvoir afficher. Le microprocesseur 42 est relié par un bus d'adresse 190 aux mémoires 45 et 46. Les mémoires 45 et 46 sont reliées par un bus 211 au processeur vidéo 15. D'autre part, le bus 211 relie les mémoires 45 et 46 respectivement aux registres 47 et 48. Les registres 47 et 48 sont reliés à la mémoire 45 par l'intermédiaire de mêmes circuits "ou exclusif" 49 et 50 que les décodeurs respectivement 43 et 44. Le microprocesseur 42 est associé à une mémoire vive 420 (RAM en terminologie anglo-saxonne). Le microprocesseur 42 est connecté à la mémoire 420 par l'intermédiaire de bus de donnée 422, de commande 421 et d'adresse 423.

Avantageusement le microprocesseur 42 comporte une mémoire vive interne remplaçant la mémoire vive 420. Par exemple le microprocesseur TMS 320 vendu par la Société Texas Instruments comporte une mémoire interne rapide de 144 mots de 16 bits.

Le microprocesseur 42 calcule pour chaque ligne de balayage trame les coordonnées de l'intersection de la ligne de balayage avec les limites des surfaces à colorier. Sur la figure 5 de tels points d'intersection portaient les références 31, 32, 33, 34, 35, 310. L'affichage sur l'écran comporte deux étapes. Dans une première étape est tracé en balayage cavalier le squelette de l'image portant les références 21, 22 et 23 sur la figure 2. Dans une seconde étape on procède au coloriage des surfaces à l'aide d'un balayage trame. Pendant la première étape le microprocesseur 42 stocke sous forme d'un tableau les paramètres définissant les limites dans la mémoire 420. Dans la seconde étape le microprocesseur 42 calcule pour chaque limite les coordonnées de l'éventuelle intersection de la limite avec la ligne de trame. Ces intersections sont stockées au fur et à mesure dans une des deux mémoires ligne par exemple 45. Les coordonnées chargées dans la mémoire 45 serviront à l'affichage de la ligne suivante. Simultanément, l'autre mémoire, en l'occurrence la mémoire 46 permet d'afficher actuellement une ligne de trame. A la ligne suivante, le rôle des mémoires 45 et 46 doit être changé. La mémoire 46, est effacée. Le microprocesseur 42 va effectuer l'écriture de la mémoire 46 des coordonnées des intersections des limites avec la ligne, tandis que la mémoire 45 sera chargée de l'affichage de la ligne précédemment calculée.

Dans un exemple de réalisation du dispositif selon l'invention le processeur vidéo 15 comporte un ensemble de n bascules 151, un encodeur de priorité 152, une mémoire 153, une interface 154. L'ensemble de n bascules 151 est connecté au bus 211. Les bascules 151 sont reliées à un encodeur 152 par n lignes. L'encodeur 152 est relié par un bus d'adresse à la mémoire 153. La mémoire 153 est par exemple une mémoire vive (RAM en terminologie anglo-saxonne). La mémoire 153 est reliée par un bus de donnée à l'interface 154. L'interface 154 est reliée par des lignes analogiques 16 par exemple aux canons à électrons permettant de délivrer la couleur rouge, vert et bleu d'un tube cathodique couleur 311.

Le circuit 151 comporte autant de bascules que l'on veut pouvoir afficher de couleurs. Le bus 211 transmet en parallèle les informations sur les n couleurs que l'on veut pouvoir afficher, par exemple 16. Dans ce cas chacune des seize bascules 151 change d'état chaque fois que pour une couleur une limite a été détectée, c'est-à-dire quand "1" est présent à son entrée. Ainsi, les bascules 151 génèrent les créneaux 23 à 28 de la figure 5. Ces créneaux permettent à l'encodeur 152 de générer l'adresse de créneaux, la mémoire palette 153, où sont stockées les combinaisons des intensités de couleurs rouge, vert et bleu nécessaires à l'obtention de chaque couleur désirée. L'encodeur 152 tient compte des priorités pour l'affichage des couleurs. Ces couleurs obtenues sont illustrées par la courbe 36 de la figure 6. En fait, l'encodeur 152 génère pendant le temps désiré, à l'intérieur du balayage d'une ligne de trame l'adresse dans la mémoire palette 153 de la couleur désirée puis, génère l'adresse de la couleur suivante et ainsi jusqu'à la fin de la ligne de trame. Dans l'exemple illustré par la courbe 36 de la figure 6 l'encodeur 152 génère l'adresse dans la mémoire 153 de la couleur de la région 25, celle de la région 26, puis celle de la région 27.

Dans une première réalisation du dispositif selon l'invention, la hiérarchie des priorités est câblée à l'intérieur de l'encodeur 152. Des portes logiques bloquent la génération de l'adresse dans la mémoire 153 d'une couleur si une couleur placée plus haut dans la hiérarchie de priorité doit aussi être affichée.

Dans une seconde variante de réalisation du dispositif selon l'invention, on dispose d'un encodeur programmable permettant de changer l'ordre dans la hiérarchie des priorités. Dans ce cas, l'encodeur 152 reçoit par un bus non représenté sur la figure 8 l'ordre de la hiérarchie désirée.

Le bus reliant l'encodeur 152 à la mémoire 153 est par exemple un bus de 4 bits permettant à l'écran de générer seize couleurs. La mémoire palette 153 délivre les valeurs numériques des intensités des couleurs primaires nécessaires à l'obtention des couleurs désirées. Pour une mémoire palette 153 vive on peut changer les couleurs en chargeant par un bus non représenté les nouvelles valeurs de combinaison de couleurs primaires rouge, vert et bleu permettant d'obtenir lesdites couleurs. L'interface 154 est composée par exemple de trois convertisseurs numériques-analogiques, attaquant soit directement, soit par l'intermédiaire d'amplificateur non représenté, les canons à électrons d'un tube cathodique 311.

Dans une autre variante de réalisation, la mémoire 153 est une mémoire permanente par exemple mémoire morte programmable (PROM en terminologie anglo-saxonne), mémoire électriquement programmable (EPROM en terminologie anglo-saxonne) ou une mémoire morte électriquement reprogrammable (EEPROM en terminologie anglo-saxonne). Dans ce cas il est avantageux de précharger les couleurs désirées.

Il est entendu que le processeur vidéo 15 est adapté à un écran comportant une interface vidéo de type RVB, comme par exemple un tube cathodique couleur, un écran électroluminescent ou un écran couleur à cristaux liquides. Il est bien entendu que si l'on dispose d'un écran matriciel adressable directement le processeur vidéo 15 et notamment l'interface 154 sera adapté à l'adressage de ce type d'écran.

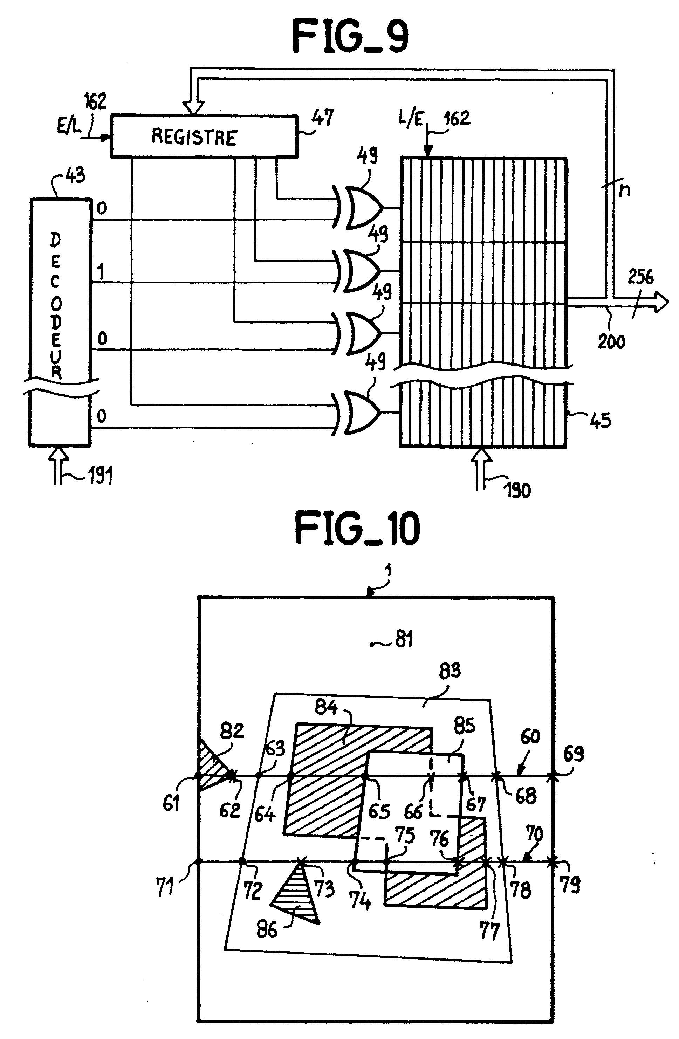

Sur la figure 9, on peut voir un détail de réalisation du dispositif de la figure 8. Le schéma de la figure 9 permet d'expliquer la gestion par un système selon l'invention d'un point singulier, c'est-à-dire d'un point intersection unique de la ligne balayée avec une surface. Le point 32 de la figure 5 ainsi que le point 73 de la figure 10 sont des points singuliers. Le dispositif de la figure 9 permet d'éviter le changement de couleur à un point singulier. La mémoire 45 est organisée en n mots de par exemple 256 bits. n est le nombre de couleurs que l'on veut pouvoir afficher simultanément à l'écran, 256 est un exemple du nombre d'éléments d'images que l'on désire pouvoir afficher sur chaque ligne. Il est entendu que l'invention s'applique à des nombres de couleurs et nombres d'éléments d'images différents. Par exemple, pour une station de travail de conception assistée par ordinateur (CAO) on utilisera un affichage de 1024 lignes comportant 1024 éléments d'images pouvant prendre 128 couleurs. Avant l'écriture d'une ligne la mémoire vidéo 45 est effacée, c'est-à-dire chargée avec des zéros à toutes les adresses. Pour chaque intersection d'une limite de couleur avec la ligne de trame on inscrit un "1" pour chacune des couleurs à la coordonnée de ladite intersection. Dans chacun des mots correspondant à une couleur on écrit bit à bit. On n'a donc pas besoin de bus de données, on utilise uniquement deux bus d'adresse 190 et 191. Le bus 190 transmet la coordonnée où doit être faite l'écriture, le bus 191 transmet au décodeur 43 les couleurs pour lesquelles on désire écrire un "1". Le dernier point inscrit est transmis par le bus 211 au registre 47. Chacune des couleurs en sortie du registre 47 est connectée par un des circuits logiques "ou exclusif" 49 aux entrées des couleurs de la mémoire 45. L'autre entrée des circuits logiques "ou exclusif" 49 est reliée au décodeur de couleurs 43. Si on se trouve à un point singulier, le décodeur 43 avait pour la ou les couleurs concernées l'ordre d'écrire un "1" correspondant à la seconde intersection de la limite de la ou des couleurs avec la ligne de trame. Etant donné que le registre 47 a stocké la précédente transition nous aurons sur les deux entrées des circuits "ou exclusif" 49 un "1". Ainsi le circuit logique 49 délivrera à la mémoire vidéo 45 un "0". De même si, ni à l'écriture précédente, ni à l'écriture actuelle, aucune intersection ne doit être inscrite le circuit 49 délivrera un "0". Par contre, si à une seule des deux écritures successives on écrit un "1" correspondant à une intersection le circuit "ou exclusif" 49 concerné délivrera un "1" à sa sortie, ayant un "0" à une de ses entrées et un "1" à l'autre de ses entrées.

La synchronisation de la mémoire vidéo 45 et du registre 47 ou de la mémoire vidéo 45 et du registre 48 est assurée par des signaux lecture-écriture 162. Ces signaux permettent alternativement la lecture de la mémoire 45 et l'écriture du registre 47 ou l'écriture de la mémoire 45 et la lecture du registre 47. Les signaux de commande lecture-écriture à écriture-lecture 162 de la mémoire vidéo 45 et du registre 47 sont générées soit par microprocesseur 42 soit par une logique externe de type connu, non représenté.

Sur la figure 10, on illustre un exemple d'écran 1 qu'on peut vouloir afficher, l'affichage résultant et le calcul à effectuer pour deux lignes de trame 60 et 70. L'écran 1 de la figure 10 comporte des surfaces 81, 82, 83, 84, 85 et 86. Comme on peut le voir sur la figure la surface 81 a la priorité la plus faible, en effet elle est recouverte par chacune des surfaces 82 à 86. On peut voir d'autre part que la surface 83 a une priorité inférieure aux surfaces 84, 85 et 86. Ainsi chaque fois qu'il faudra colorier une partie de l'écran recouverte par la surface 83 et par exemple la surface 84, on la coloriera avec la couleur correspondant à la surface 84. On voit aussi que la surface 84 a une priorité inférieure à la surface 85.

Sur la figure 10, on a pris de façon arbitraire deux lignes de trame référencées 60 et 70 pour expliquer le fonctionnement du dispositif selon l'invention. Dans la réalité l'affichage d'un écran est obtenu par balayage cavalier des motifs et par balayage de trame de toutes les lignes de trame de l'écran 1. Sur la figure 10, on a représenté par des points noirs les premières limites d'une couleur et par des croix la deuxième limite d'une couleur. Le point 61 correspond à l'intersection de la première limite des surfaces 81 et 82 avec la ligne 60. Le point 62 correspond à la seconde limite de la surface 82 avec la ligne 60. Le point 63 correspond à la première limite de la surface 83 avec la ligne 60. Le point 64 correspond à la première limite de la surface 84 avec la ligne 60. Le point 65 correspond à la première limite de la surface 85 avec la ligne 60. Le point 66 correspond à la seconde limite de la surface 84 et de la ligne 60. Le point 67 correspond à l'intersection de la seconde limite de la surface 85 et de la ligne 60. Le point 68 correspond à l'intersection de la seconde limite de la surface 83 et de la ligne 60. Le point 69 correspond à la seconde limite de la surface 81 et de la ligne 60.

Le point 71 correspond à l'intersection de la première limite de la surface 81 avec la ligne 70. Le point 72 correspond à l'intersection de la première limite de la surface 83 avec la ligne 70. Le point 73 correspond à la première et la seconde limites de la surface 86 avec la ligne 70.

Le point 73 est un point singulier. Un affichage clair sur l'écran exige lors du balayage trame de ne pas changer la couleur de ce point. Le traitement de point singulier effectué par les circuits logiques "ou exclusif" 49 et 50 des figures 8 et 9.

Le point 74 correspond à l'intersection de la première limite de la surface 85 et de la ligne 70. Le point 75 correspond à la première limite de la surface 84 et de la ligne 70. Le point 76 correspond à la seconde limite de la surface 85 et de la ligne 70. Le point 77 correspond à l'intersection de la seconde limite de la surface 84 et de la ligne 70. Le point 78 correspond à l'intersection de la seconde limite de la surface 83 de la ligne 70. Le point 79 correspond à l'intersection de la seconde limite de la surface 81 et de la ligne 70.

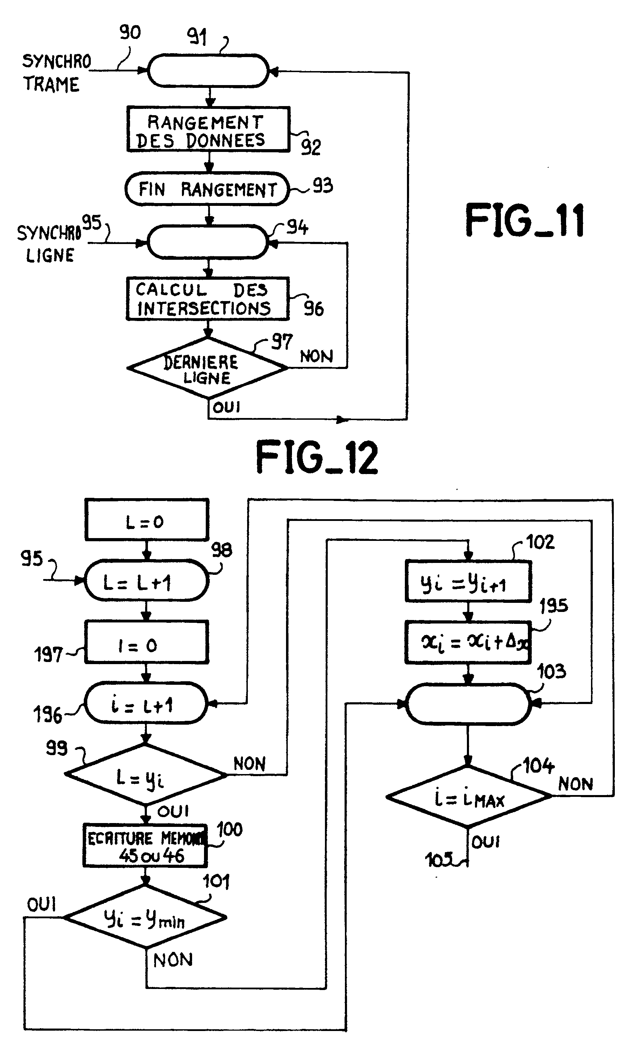

Sur la figure 11, on peut voir l'organigramme du programme du traitement effectué par un microprocesseur 42. Le programme de la figure 11 est un programmable tournant de façon continue pendant tout le temps de l'affichage sur l'écran. Le programme débutant en 91. En ce moment le microprocesseur reçoit une interruption 90 du signal synchro-trame. Après cette interruption permettant la synchronisation du calcul avec le balayage de l'écran on va de 91 en 92. En 92, on effectue le rangement des données concernant l'affichage à effectuer dans la mémoire 420. De 92 on va en 93 qui correspond à la fin du rangement des données dans la mémoire 420. Les données sont par exemple rangées sous forme d'un tableau des limites comportant la ligne du début d'une limite ainsi que l'équation définissant cette limite. Pour un tel type d'organisation de données, aucune limite ne comporte pas plus d'une intersection avec une quelconque des lignes de trame. Ainsi pour définir une zone fermée à colorier il faut au moins deux limites.

Si toutes les limites sont des droites, il suffit de stocker dans le tableau de la mémoire 420 la pente de chaque droite, l'équation générale de toutes les droites étant identique.

Ces étapes correspondent par exemple à la moitié du temps de programme effectué par le microprocesseur y compris les temps d'attente de synchronisation.

Dans un exemple de réalisation du dispositif selon l'invention l'exécution de la partie 91 à 93 du programme dure 8 ms.

De 93 on va à 94. En 94 on attend l'interruption de synchro-ligne 95. Cette interruption provoque le début du calcul des intersections des limites des surfaces avec la ligne de trame traitée. De 96 on va en 97. En 97, on teste si la ligne traitée est la dernière ligne de la trame. Si non, on retourne en 94 où on attend l'interruption de synchro-ligne qui va déclencher le calcul des intersections en 96 de la ligne suivante. Si oui, on retourne en 91 ou on attend l'interruption 90 des synchro-trames. La seconde partie du programme de 94 à 97 dure elle aussi, dans un exemple particulier de réalisation du dispositif selon l'invention 8 ms.

Sur la figure 12, on peut voir un organigramme du sous-programme du calcul des intersections du programme de la figure 11. Ce sous-programme correspond au pas 94 à 97 de la figure 11.

Le sous-programme correspond au cas où les limites des diverses surfaces sont des droites. Toutes les surfaces pouvant être affichées à l'écran sont approximées par des suites de droites. Dans un autre cas il est possible de définir d'autres types de limite de surface comportant des droites, des arcs de cercle, des élipses et hyperboles. Bien entendu le type des limites utilisées doit être défini pour permettre le calcul au microprocesseur 42 de la figure 8.

Le sous-programme de la figure 12 commence en 144. En 144 on met à "0" le compteur du numéro, L, de la ligne traitée. On va en 98. En 98 on reçoit une interruption 95 de la synchro-ligne qui débute le calcul. On incrémente L d'une unité. De 98 on va en 197.

En 197, on met à "0" l'indice des limites i.
On va en 196.

En 196, on incrémente l'indice des limites i d'une unité. On va en 99. En 99 on teste si la ligne L traitée actuellement coupe la limite yi. Ces données sont lues dans un tableau contenu par la mémoire 420 de la figure 8.
Si non on va en 103.
Si oui on va en 100.
En 100 on écrit l'intersection $x_i$ dans la mémoire ligne 45 ou 46. On va en 101.
En 101 on vérifie si la limite yi se termine au point d'intersection de la mémoire 420 de la figure 8.
Si oui on va en 103.
Si non on va en 102.
En 102, on inscrit dans le tableau de la mémoire 420 de la figure 8 que la limite précédemment traitée coupe la ligne de trame plus bas. On va en 195.
En 195 on calcule et on stocke dans un tableau la mémoire 420 de la figure 8 l'abscisse de la limite précédemment traitée une ligne plus bas. On va en 103.

De 103 on va en 104.
En 104 on teste si on a terminé de calculer les intersections pour toutes les limites stockées dans le tableau de la mémoire 420 de la figure 8. Si non on va en 196. Si oui on va en 105 qui correspond à la fin du sous-programme. L'exécution du sous-programme de la figure 12 a duré par exemple 8 ms.

Le dispositif selon la présente invention s'applique principalement à l'affichage couleur de haute qualité. L'invention s'applique notamment à la visualisation sur écran cathodique couleur des vues tridimentionnelles en perspective.

## Revendications

1. Dispositif d'affichage graphique comportant un écran (1) couleur à balayage trame, l'affichage étant obtenu par remplissage de zones colorées (2, 3, 4, 5, 7, 8, 9, 24, 25, 26, 27, 28, 81, 82, 83, 84, 85, 86) délimitées par des limites (21, 22, 23), comportant un microprocesseur (42) calculant successivement pour chaque ligne de trame (30, 60, 70) les points d'intersection (31, 32, 33, 34, 35, 310, 61, 62, 63, 64, 65, 66, 67, 68, 71, 72, 73, 74, 75, 76, 77, 78, 79) de la prochaine ligne de trame à afficher (30, 60, 70) avec lesdites limites (21, 22, 23) des zones colorées (2, 3, 4, 5, 7, 8, 9, 24, 25, 26, 27, 28, 81, 82, 83, 84, 85, 86), caractérisé par un traitement de l'image ligne par ligne et par le fait qu'il comporte pour cela une mémoire vidéo (45 ou 46) de ligne stockant une ligne de trames à afficher et une seule.

2. Dispositif selon la revendication 1, caractérisé par le fait que le dessin des limites (21, 22, 23) des zones colorées (2, 3, 4, 5, 7, 8, 9, 24, 25, 26, 27, 28, 81, 82, 83, 84, 85, 86) est effectué à l'écran par balayage cavalier.

3. Dispositif selon la revendication 1 ou 2, caractérisé par le fait que l'écran (1) est un tube cathodique couleur (311) à masque d'ombre.

4. Dispositif selon la revendication 3, caractérisé par le fait qu'il comporte deux mémoires vidéo (45 et 46), alternativement l'une (45 ou 46) permettant l'écriture des informations à afficher sur la prochaine ligne de trame, la lecture de l'autre (45 ou 46) assurant l'affichage d'une ligne de trame.

5. Dispositif selon la revendication 3 ou 4, caractérisé par le fait qu'il comporte un registre (47, 48) connecté à la sortie de chaque mémoire vidéo (45, 46) et des portes logiques "ou exclusif" (49, 50) connectées entre l'entrée de la mémoire (45, 46) et le registre (47, 48) d'une part et le microprocesseur (42) d'autre part, permettant d'éviter d'inscrire dans la mémoire vidéo (45, 46) l'existence d'une intersection multiple en un point entre une ligne de trame (30, 60, 70) et une limite (21, 22, 23) de zones colorées (2, 3, 4, 5, 7, 8, 9, 24, 25, 26, 27, 28, 81, 82, 83, 84, 85, 86).

6. Dispositif selon l'une quelconque des revendications précédentes, caractérisé par le fait que ledit dispositif est un dispositif d'affichage en perspective de vues tridimensionnelles.

7. Dispositif selon l'une quelconque des revendications précédentes, caractérisé par le fait qu'il comporte un processeur vidéo (15) comportant une mémoire palette (153) où sont stockées les intensités des couleurs primaires nécessaires à l'obtention des couleurs désirées associé à une interface comportant un convertisseur numérique-analogique associé à chaque générateur de couleur primaire.

8. Dispositif selon l'une quelconque des revendications 3 à 7, caractérisé par le fait que la mémoire vidéo (45, 46) est organisée en n mots dont le nombre de bits est égal au nombre d'éléments d'image par ligne de trame, n étant le nombre maximal de couleurs pouvant être utilisées.

9. Dispositif selon la revendication 8, caractérisé par le fait qu'il comporte des bascules (151) connectées en parallèle à la sortie de chaque mot de la mémoire vidéo (45, 46) chaque bascule changeant d'état logique lorsqu'elle reçoit un "1", les bascules (151) étant connectées à un encodeur de priorité (152) lui-même connecté à la mémoire palette (153).

10. Procédé d'affichage graphique sur écran (1) comportant les étapes :
    - balayage cavalier permettant l'affichage de limites (21, 22, 23) de zones ;
    - balayage trame de zones colorées (2, 3, 4, 5, 7, 8, 9, 24, 25, 26, 27, 28, 81, 82, 83, 84, 85, 86), avec utilisation d'un microprocesseur (42) pour calculer successivement, pour chaque ligne de trame (30, 60, 70), les points d'intersection (31-35, 310, 61-69, 71-79) de ladite ligne de trame avec les limites des zones colorées, caractérisé par un traitement de l'image ligne par ligne et par le fait que, pour cela, pendant l'étape de balayage trame on procède simultanément à l'affichage d'une ligne par lecture d'une mémoire (420) et au calcul et au stockage dans la mémoire (420) par le microprocesseur (42) des abscisses des points d'intersection (31, 32, 33, 34, 35, 310, 61, 62, 63, 64, 65, 66, 67, 68, 69, 71, 72, 73, 74, 75, 76, 77, 78, 79) de la prochaine ligne de trame à afficher avec les limites (21, 22, 23) des zones colorées (2, 3, 4, 5, 7, 8, 9, 24, 25, 26, 27, 28, 81, 82, 83, 84, 85, 86) et que l'on stocke une ligne de trame à afficher et une seule dans une mémoire vidéo de ligne (45 ou 46).

11. Procédé selon la revendication 10, caractérisé par le fait que les limites (21, 22, 23) des zones colorées (2, 3, 4, 5, 7, 8, 9, 24, 25, 26, 27, 28, 81, 82, 83, 84, 85, 86) sont des segments de droite.

12. Procédé selon la revendication 10 ou 11, caractérisé par le fait que ledit procédé est un procédé d'affichage de vue en perspective d'objets tridimensionnels tenant compte des faces cachées desdits objets en tenant compte des couleurs prioritaires des zones de recouvrement (260, 270) de deux zones colorées (2, 3, 4, 5, 7, 8, 9, 24, 25, 26, 27, 28, 81, 82, 83, 84, 85, 86).

13. Procédé d'affichage selon la revendication 10, 11 ou 12, caractérisé par le fait que ledit procédé est un procédé d'affichage d'image synthétisé par un générateur de symboles surfacique (810).

## Claims

1. A graphic display device comprising a colour screen (1) of the frame scanning type, the displaying being realized by filling coloured zones (2, 3, 4, 5, 7, 8, 9, 24, 25, 26, 27, 28, 81, 82, 83, 84, 85, 86) defined between border lines (21, 22, 23), the device comprising a microprocessor (42) which calculates successively for each frame line (30, 60, 70) the intersection points (31, 32, 33, 34, 35, 310, 61, 62, 63, 64, 65, 66, 67, 68, 71, 72, 73, 74, 75, 76, 77, 78, 79) between the next frame line to be displayed (30, 60, 70) and said border lines (21, 22, 23) of the coloured zones (2, 3, 4, 5, 7, 8, 9, 24, 25, 26, 27, 28, 81, 82, 83, 84, 85, 86), characterized in that the picture is treated line after line and that the device comprises to this end a video memory (45 or 46) allowing to store one frame line only.

2. A device according to claim 1, characterized in that the sketch of the border lines (21, 22, 23) of the coloured zones (2, 3, 4, 5, 7, 8, 9, 24, 25, 26, 27, 28, 81, 82, 83, 84, 85, 86) is realized on the screen by a superimposed scan.

3. A devic according to claim 1 or 2, characterized in that the screen (1) is a cathode ray colour tube (311) of the shadow mask type.

4. A device according to claim 3, characterized in that it comprises two video memories (45 and 46), one of which (45 or 46) alternatively storing data which should be displayed on the next following frame line while the other (45 or 46) is read out and insures the display of a frame line.

5. A device according to claim 3 or 4, characterized in that it comprises a register (47, 48) connected to the output of each video memory (45, 46), and logical gates of the exclusive OR type (49, 50) connected between the input of the memory (45, 46) and the register (47, 48) on the one hand and the microprocessor (42) on the other hand, thus allowing to avoid the inscription into the video memory (45, 46) of the existence of a multiple intersection at a point between a frame line (30, 60, 70) and a border line (21, 22, 23) of coloured zones (2, 3, 4, 5, 7, 8, 9, 24, 25, 26, 27, 28, 81, 82, 83, 84, 85, 86).

6. A device according to any one of the preceding claims, characterized in that the device is conceived to display 3D-views perspectively.

7. A device according to any one of the preceding claims, characterized in that it comprises a video processor (15) which includes a palette memory (153) in which the intensities of the primary colours are stored, which are necessary for obtaining the desired colours, this processor being associated to an interface comprising a digital-to-analog converter which is associated to each primary colour generator.

8. A device according to any one of claims 3 to 7, characterized in that the video memory (45, 46) is organized to include n words whose number of bits is equal to the number of picture elements of a frame line, n being the maximum number of colours which can be used.

9. A device according to claim 8, characterized in that it comprises bistables (151) which are connected in parallel to the output of each word of the video memory (45, 46), each bistable changing its logical state when receiving a logical "1", the bistables (151) being connected to a priority encoder (152), the latter being connected to the palette memory (153).

10. A graphic display method for displaying on a screen (1), the method comprising the following steps:
- a superimposed scanning in order to display border lines (21, 22, 23) of zones;
- frame scanning of coloured zones (2, 3, 4, 5, 7, 8, 9, 24, 25, 26, 27, 28, 81, 82, 83, 84, 85, 86) by means of a microprocessor (42) which calculates successively for each frame line (30, 60, 79) the intersection points (31-35, 310, 61-69, 71-79) between said frame line and the border lines of the coloured zones, characterized in that the picture is treated line by line and that, to this end, and during the frame scanning method step, simultaneously one line is displayed by reading out a memory (420) and the abscisses of the intersections points (31, 32, 33, 34, 35, 310, 61, 62, 63, 64, 65, 66, 67, 68, 71, 72, 73, 74, 75, 76, 77, 78, 79) of the next frame line to be displayed with the border lines (21, 22, 23) of the coloured zones (2, 3, 4, 5, 7, 8, 9, 24, 25, 26, 27, 28, 81, 82, 83, 84, 85, 86) are calculated by the microprocessor (42) and stored in the memory (420) and that one unique frame line to be displayed is stored in a video line memory (45 or 46).

11. A method according to claim 10, characterized in that the border lines (21, 22, 23) of the coloured zones (2, 3, 4, 5, 7, 8, 9, 24, 25, 26, 27, 28, 81, 82, 83, 84, 85, 86) are straight line segments.

12. A method according to claim 10 or 11, characterized in that said method is intended to display 3D-objects perspectively by taking into account non-visible surfaces of said object and the priority colours of the zones (260, 270) overlapping two coloured zones (2, 3, 4, 5, 7, 8, 9, 24, 25, 26, 27, 28, 81, 82, 83, 84, 85, 86).

13. A display method according to claim 10, 11 or 12, characterized in that said method is intended to display pictures which are synthetically generated by a surface symbol generator (810).

**Patentansprüche**

1. Graphische Anzeigevorrichtung mit einem Farbbildschirm (1) mit Bildabtastung, wobei die Anzeige durch Auffüllen von durch Grenzen (21, 22, 23) definierten kolorierten Zonen (2, 3, 4, 5, 7, 8, 9, 24, 25, 26, 27, 28, 81, 82, 83, 84, 85, 86) erreicht wird, unter Verwendung eines Mikroprozessors (42), der nacheinander für jede Zeile des Bilds (30, 60, 70) die Schnittpunkte (31, 32, 33, 34, 35, 310, 61, 62, 63, 64, 65, 66, 67, 68, 71, 72, 73, 74, 75, 76, 77, 78, 79) der nächsten anzuzeigenden Bildzeile (30, 60, 70) mit den Grenzen (21, 22, 23) der kolorierten Zonen (2, 3, 4, 5, 7, 8, 9, 24, 25, 26, 27, 28, 81, 82, 83, 84, 85, 86) berechnet, dadurch gekennzeichnet, daß eine Bildverarbeitung Zeile für Zeile erfolgt und daß hierfür ein Videosignalspeicher (45 oder 46) zur Speicherung einer einzigen anzuzeigenden Bildzeile vorgesehen ist.

2. Vorrichtung nach Anspruch 1, dadurch gekennzeichnet, daß die Zeichnung der Grenzen (21, 22, 23) der kolorierten Zonen (2, 3, 4, 5, 7, 8, 9, 24, 25, 26, 27, 28, 81, 82, 83, 84, 85, 86) auf dem Bildschirm durch überlagerte Abtastung erfolgt.

3. Vorrichtung nach Anspruch 1 oder 2, dadurch gekennzeichnet, daß der Bildschirm (1) eine Kathodenstrahl-Farbbildröhre (311) mit Schattenmaske ist.

4. Vorrichtung nach Anspruch 3, dadurch gekennzeichnet, daß zwei Videosignalspeicher (45 und 46) vorgesehen sind, von denen abwechselnd der eine (45 oder 46) im Schreibmodus für die nächste darzustellende Bildzeile Informationen empfängt, während der andere (45 oder 46) ausgelesen wird und die Darstellung einer Bildzeile bewirkt.

5. Vorrichtung nach Anspruch 3 oder 4, dadurch gekennzeichnet, daß sie ein an den Ausgang jedes Videosignalspeichers (45, 46) angeschlossenes Register (47, 48) und logische Exklusiv-ODER-Tore (49, 50) aufweist, die zwischen den Eingang des Speichers (45, 46) und das Register (47, 48) einerseits und den Mikroprozessor (42) andererseits eingefügt sind und es ermöglichen, die Existenz eines Vielfachschnittpunkts in einem Punkt zwischen einer Bildzeile (30, 60, 70) und einer Grenze (21, 22, 23) von kolorierten Zonen (2, 3, 4, 5, 7, 8, 9, 24, 25, 26, 27, 28, 81, 82, 83, 84, 85, 86) in den Videosignalspeicher (45, 46) einzuschreiben vermeiden.

6. Vorrichtung nach einem beliebigen derr vorhergehenden Ansprüche, dadurch gekennzeichnet, daß die Vorrichtung eine Perspektivdar-stellung von dreidimensionalen Ansichten er-möglicht.

7. Vorrichtung nach einem beliebigen der vorhergehenden Ansprüche, dadurch gekennzeichnet, daß sie einen Videosignalprozessor (15) mit einem Farbpalettenspeicher (153) aufweist, in dem die Intensitäten der zur Darstellung der gewünschten Farben erforderlichen Primärfarben gespeichert sind, wobei dieser Prozessor einen Schnittstellenschaltkreis mit einem Digital-Analog-Wandler für jeden Primärfarbengenerator aufweist.

8. Vorrichtung nach einem beliebigen der Ansprüche 3 bis 7, dadurch gekennzeichnet, daß der Videosignalspeicher (45, 46) Speicher für n Wörter besitzt, deren Bitanzahl gleich der Anzahl von Elementen des Bilds in einer Bildzeile ist, wobei n die Maximalzahl von verwendbaren Farben darstellt.

9. Vorrichtung nach Anspruch 8, dadurch gekennzeichnet, daß sie Kippstufen (151) aufweist, die parallel an den Ausgang jedes Worts des Videosignalspeichers (45, 46) angeschlossen sind, wobei jede Kippstufe ihren logischen Zustand wechselt, wenn sie eine "1" zugeführt erhält, und wobei die Kippstufen (151) an einen Prioritätskodierer (152) angeschlossen sind, der seinerseits mit dem Farbpalettenspeicher (153) verbunden ist.

10. Verfahren zur graphischen Anzeige auf einem Bildschirm (1), das folgende Verfahrensschritte aufweist:
   - Überlagerungsabtastung zur Darstellung von Zonengrenzen (21, 22, 23),
   - Bildabtastung von kolorierten Zonen (2, 3, 4, 5, 7, 8, 9, 24, 25, 26, 27, 28, 81, 82, 83, 84, 85, 86) unter Verwendung eines Mikroprozessors (42) zur aufeinanderfolgenden Berechnung der Schnittpunkte (31-35, 310, 61-69, 71-79) der Bildzeile mit den Grenzen der kolorierten Zonen, und zwar für jede Bildzeile (30, 60, 70), dadurch gekennzeichnet, daß eine Bildverarbeitung Zeile für Zeile erfolgt und daß hierfür während der Bildabtastung zugleich eine Zeile durch Auslesen eines Speichers (420) angezeigt wird und durch den Mikroprozessor (42) die Abszissen der Schnittpunkte (31, 32, 33, 34, 35, 310, 61, 62, 63, 64, 65, 66, 67, 68, 71, 72, 73, 74, 75, 76, 77, 78, 79) der nächsten darzustellende Bildzeile (21, 22, 23) der kolorierten Zonen (2, 3, 4, 5, 7, 8, 9, 24, 25, 26, 27, 28, 81, 82, 83, 84, 85, 86) berechnet und im Speicher (420) abgelegt werden, und daß eine einzige darzustellende Bildzeile in einem Videosignal-Zeilenspeicher (45 oder 46) gespeichert wird.

11. Verfahren nach Anspruch 10, dadurch gekennzeichnet, daß die Grenzen (21, 22, 23) der kolorierten Zonen (2, 3, 4, 5, 7, 8, 9, 24, 25, 26, 27, 28, 81, 82, 83, 84, 85, 86) von geraden Strecken gebildet werden.

12. Verfahren nach Anspruch 10 oder 11, dadurch gekennzeichnet, daß das Verfahren eine Perspektivdarstellung von dreidimensionalen Gegenständen erlaubt, unter Berücksichtigung der verdeckten Seiten der Gegenstände und der Prioritärzonen der überlappungszonen (260, 270) zweier kolorierter Zonen (2, 3, 4, 5, 7, 8, 9, 24, 25, 26, 27, 28, 81, 82, 83, 84, 85, 86) erlaubt.

13. Anzeigeverfahren nach Anspruch 10, 11, oder 12, dadurch gekennzeichnet, daß es sich um ein synthetisches Bildanzeigeverfahren mit einem Generator von Flächensymbolen (810) handelt.

# FIG_1

# FIG_4

# FIG_2

# FIG_3

FIG_5

FIG_6

FIG_7

FIG_8

# FIG_9

# FIG_10

SYNCHRO
TRAME ——→ 90 ⟨ 91 ⟩ ◀——

RANGEMENT
DES DONNEES — 92

FIN RANGEMENT — 93

SYNCHRO 95
LIGNE ——→ ⟨ 94 ⟩ ◀——

CALCUL DES
INTERSECTIONS — 96

97
DERNIERE LIGNE — NON

OUI

# FIG_11

# FIG_12

$L = 0$

95 — $L = L+1$ — 98

197 — $I = 0$

196 — $i = L+1$ ◀——

99
$L = y_i$ — NON

OUI

ECRITURE MEMOIRE — 100
45 ou 46

101
OUI — $y_i = y_{min}$

NON

$y_i = y_{i+1}$ — 102

$x_i = x_i + \Delta x$ — 195

⟨ 103 ⟩

104
$i = i_{MAX}$ — NON

OUI

105

17